# EUROPÄISCHE PATENTSCHRIFT

(11) **EP 0 354 328 B1**
(45) Veröffentlichungstag und Bekanntmachung des Hinweises auf die Patenterteilung: **12.01.1994**
(21) Anmeldenummer: 89111435.7
(22) Anmeldetag: 23.06.1989
(51) Int. Cl.: H02K 1/17, H02K 1/27, H02K 23/04

(54) **Axialfeldmotor**
Axial field motor
Moteur à champ axial

(30) Priorität: 06.08.1988 DE 8810048 U
(43) Veröffentlichungstag der Anmeldung: 14.02.1990
(73) Patentinhaber: BAUMÜLLER NÜRNBERG GMBH, D-90482 Nürnberg (DE)
(72) Erfinder: Ernst, Wolfgang, D-3353 Bad Gandersheim (DE)
(74) Vertreter: Matschkur, Götz, Lindner Patent- und Rechtsanwälte

(56) Entgegenhaltungen:
- DE-A- 3 510 503
- US-A- 3 513 341
- US-A- 4 383 192

## Beschreibung

Die Erfindung bezieht sich auf einen Axialfeldmotor, insbesondere Scheibenläufermotor, mit über eine vorgegebene Anzahl von Sektoren des Läufers oder Ständers angeordneten, wechselweise unterschiedlich gepolten Zylindermagneten.

Bei den üblichen Ausführungen derartiger Axialfeldmotoren verwendet man Alnico-Zylindermagnete, die im allgemeinen von Stangenmaterial abgelängt werden, wobei in jedem Sektor ein entsprechend der Zahl der Sektoren (Polzahl) im Durchmesser mehr oder weniger breit ausgebildeter Zylindermagnet vorgesehen ist. Diese Ausbildung hat jedoch den Nachteil, daß der Polfluß nicht dem Maximum entspricht, das dadurch gegeben ist, daß man quasi einen Magneten mit einer Art trapezförmigem Querschnitt einsetzt. Ein solcher Magnetaufbau erfordert jedoch spezielle Werkzeuge beim Magnethersteller und ist damit gegenüber den einfach von Stangenmaterial ablängbaren Zylindermagneten erheblich aufwendiger und teurer.

Um der Trapezform bzw. einer möglichst vollständigen Ausfüllung der Segmente näherzukommen, werden in DE-35 10 503 Rechteckmagnete durch einen schrägen Vertikalschnitt zerteilt und polungsabhängig unterschiedlich wieder zusammengesetzt, was von der Bearbeitung her schwierig und zeitaufwendig ist. US-35 13 341 zeigt die Anwendung einer Vielzahl von Zylindermagneten zwischen zwei Platten mit kreisförmigem Querschnit, was jedoch lediglich der Aufmagnetisierung der Platten dient. Weiterhin werden die Magnete weder zur optimalen Raumausnutzung und damit der Optimierung des Polflusses verwendet, noch findet eine Aufteilung in Segmente statt.

Der Erfindung liegt daher die Aufgabe zugrunde, einen Axialfeldmotor der eingangs genannten Art so auszugestalten, daß bei einfachem Aufbau ein vergrößerter Polfluß erzielt wird.

Zur Lösung dieser Aufgabe ist erfindungsgemäß vorgesehen, daß in jedem Sektor mit jeweils gleicher Polausrichtung eine Mehrzahl von kleinen Zylindermagneten unter wenigstens angenäherter Ausfüllung eines trapezförmigen Segmentquerschnitts angeordnet sind, wobei bevorzugt jeweils eine ungerade Anzahl von Zylindermagneten je Sektor vorgesehen ist. Durch Vorsehen einer größeren Anzahl von Magneten außen und einer kleineren innen ergibt sich von vornherein eine Konfiguration, die als Umrißfigur einem Trapez entspricht, so daß auf sehr einfache Weise mit wiederum ablängbaren Zylindermagneten eine an die Optimalverhältnisse eines Segmentquerschnittmagneten angenäherte Magnetverteilung erreicht werden kann.

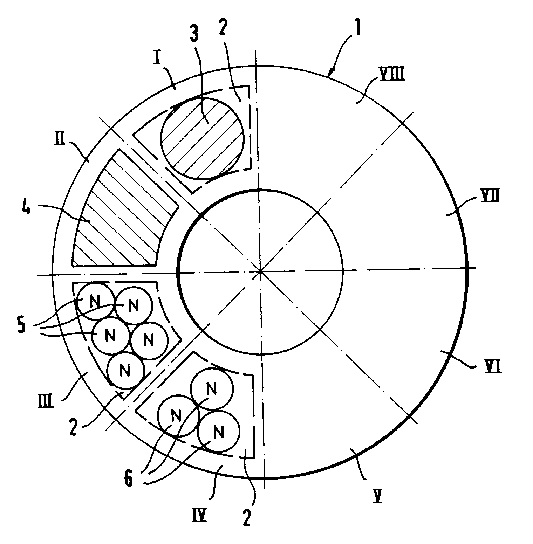

Weitere Vorteile, Merkmale und Einzelheiten der Erfindung ergeben sich aus der nachfolgenden Beschreibung eines Ausführungsbeispiels sowie anhand der Zeichnung, die schematisch die Magnetverteilung in den Segmenten eines Scheibenläufermotors in verschiedenen Ausführungsformen zeigt.

Der dargestellte 8-polige Läufer oder Ständer ist in acht Sektoren I bis VIII unterteilt, wobei in jedem dieser Sektoren Magnete vorzusehen sind, die abwechselnd unterschiedlich gerichtet gepolt sind. Im Sektor I sind dabei die üblichen Verhältnisse bei Scheibenläufermotoren dargestellt, bei denen ein einzelner Zylindermagnet 3, beispielsweise aus Alnico, vorgesehen ist, dessen Durchmesser so gewählt ist, daß er im wesentlichen dem Segment 2 eingeschrieben ist. Dies stellt ersichtlich nur eine recht unvollkommene Ausfüllung des Optimalfalls der Zylinderquerschnittsausbildung dar, die im Sektor II gezeigt ist, bei der nämlich ein Magnet 4 verwendet wird, der in seinem Querschnitt genau dem Segmentquerschnitt entspricht. Eine solche Magnetausbildung ist jedoch herstellungsmäßig kompliziert und teuer.

Um dies zu vermeiden, sind in den Sektoren III und IV zwei unterschiedliche Ausführungsformen einer erfindungsgemäßen Magnetverteilung dargestellt, bei der nämlich eine ungerade Anzahl von kleinen Zylindermagneten 5 bzw. 6 derart angeordnet sind, daß sich eine angenäherte, jedenfalls gegenüber dem Sektor I wesentlich bessere Ausfüllung des Segmentquerschnitts des Segments 2 ergibt. Dabei verwendet man die Verteilung gemäß Sektor IV - es versteht sich selbstverständlich von selbst, daß in der Praxis alle Sektoren mit der gleichen Magnetverteilung nur mit unterschiedlicher Polung ausgerüstet werden - vorwiegend für Magnetständer von Gleichstrom-Scheibenläufermotoren mit einer Kommutierungszone und αᵢ ≦ 0,75, während man die noch stärker an den Segmentquerschnitt des Magneten 4 im Sektor II angenäherte Verteilung mit fünf kleineren Zylindermagneten 5, wie im Sektor III dargestellt, vorwiegend bei Magnetläufern (bürstenlose Motoren) mit 0,8 < αᵢ ≦ 1,0 verwendet.

## Patentansprüche

1. Axialfeldmotor, insbesondere Scheibenläufermotor, mit über eine vorgegebene Anzahl von Sektoren des Läufers oder Ständers angeordneten, wechselweise unterschiedlich gepolten Zylindermagneten, dadurch gekennzeichnet, daß in jedem Sektor (I bis VIII) mit jeweils gleicher Polausrichtung eine Mehrzahl von kleineren Zylindermagneten (5, 6) unter wenigstens angenäherter Ausfüllung eines trapezähnlichen Segmentquerschnitts (2) angeordnet sind.

2. Axialfeldmotor nach Anspruch 1, dadurch gekennzeichnet, daß jeweils eine ungerade Anzahl ≧ 3 von Zylindermagneten (6, 7) je Sektor vorgesehen ist.

## Claims

1. Axial field motor, in particular disc armature motor, with cylinder magnets of alternately different polarities disposed over a specified number of sectors of the rotor or stator, characterised in that a plurality of smaller cylinder magnets (5, 6) with the same polarity are disposed in each sector (I to VIII), at least approximately filling a trapezoidal segment cross-section (2).

2. Axial field motor according to claim 1, characterised in that an odd number ≧ 3 of cylinder magnets (6, 7) is provided per sector.

## Revendications

1. Moteur à champ axial, en particulier moteur à rotor disque, avec des aimants cylindriques, disposés sur un nombre prédéterminé de secteurs du rotor ou du stator, à polarités différentes alternantes, caractérisé en ce que dans chaque secteur (I à VIII) est agencée une pluralité d'aimants cylindrique (5,6) plus petits, ayant chaque fois une direction polaire identique, remplissant au moins à peu près une section transversale de segment (2) semblable à un trapèze

2. Moteur à champ axial selon la revendication 1, caractérisé en ce que chaque fois les aimants cylindriques (6, 7) sont prévus dans chaque secteur, en nombre impair supérieur ou égal à 3.
